# EUROPÄISCHE PATENTSCHRIFT

(11) **EP 1 180 333 B1**
(45) Veröffentlichungstag und Bekanntmachung des Hinweises auf die Patenterteilung: **19.04.2006**
(21) Anmeldenummer: 00117844.1
(22) Anmeldetag: 18.08.2000
(51) Int. Cl.: A23L 1/325

(54) **Fischerzeugnis sowie Verfahren zur Herstellung desselben**
Fish product and process for the preparation thereof
Produit de poisson et Procédé de préparation

(43) Veröffentlichungstag der Anmeldung: 20.02.2002
(73) Patentinhaber: Sanamundi AG, 9496 Balzers (LI)
(72) Erfinder: Sahner, Pia, 66280 Sulzbach (DE)
(74) Vertreter: Hasler, Erich

(56) Entgegenhaltungen:
- EP-A- 0 404 214
- WO-A-93/00830
- WO-A-93/12671
- WO-A-96/03889
- DE-A- 2 639 177

## Beschreibung

Die vorliegende Erfindung betrifft ein neues Fischerzeugnis und insbesondere ein Fischwursterzeugnis sowie ein Verfahren zur Herstellung des Fischwursterzeugnisses.

Das erfindungsgemäße Fischerzeugnis ist als diätetisches Lebensmittel einzuordnen, bzw. steht diätetischen Lebensmitteln gleich, da es einen hohen Gehalt an hoch ungesättigten Fettsäuren wie Eikosapentaensäure und Docosahexaensäure aufweist und cholesterinfrei ist. Gerade diese hoch ungesättigten Fettsäuren haben in den letzten Jahren die Bedeutung von Fisch bzw. Fischerzeugnissen als ernährungsphysiologisch wertvolle Nahrungsmittel stark aufgewertet, da sie im menschlichen Körper zu sehr aktiven, nützlichen Verbindungen umgewandelt werden können. Ihr hoher Gehalt im Fett fast aller Fischarten macht Fisch hier nahezu unentbehrlich. Im Gegensatz ist der durchweg niedrige Gehalt an Cholesterin hervorzuheben. Fische mit einem ausgesprochen hohen Gehalt an ungesättigten Fettsäuren sind Wels (Waller), Lachs, Hering, Makrele, um nur einige Fischarten aufzuzählen.

Neben den oben aufgeführten Inhaltsstoffen enthält Fisch noch eine Anzahl wichtiger Mikro- und Spurenelemente sowie andere ernährungsphysiologisch wichtige Verbindungen in wechselnden Mengen. An Elementen seien weiterhin genannt Brom, Fluor, Eisen, Selen, Calcium, in Verbindungen die Vitamine A, D, E, B1, B2, B6, B12, Nicotinamid, Pantotensäure, Biotin und Folsäure.

Aufgrund der obigen Sachlage ist der Verzehr von Fischen und Fischerzeugnissen in der Bundesrepublik Deutschland nach einem durch die Berichterstattung über Nematoden verursachten Rückgang wieder angestiegen. Dieser Anstieg ist nicht zuletzt auch auf die Kenntnis zurückzuführen, daß das Verspeisen von cholesterinhaltigen Fleisch- und Wurstprodukten zu einer zunehmenden Zahl von Herz- und Kreislauferkrankungen führt.

Daher wäre es wünschenswert, Nahrungsmittel bzw. Nahrungsmittelerzeugnisse zur Verfügung zu stellen, die unter Vermeidung von cholesterinhaltigem Fleisch und Fett hergestellt werden können, jedoch gleichzeitig einen hohen Gehalt an mehrfach ungesättigten Fettsäuren aufweisen.

Bereits in den 60er Jahren wurden daher Versuche unternommen, um dieses Ziel zu erreichen. DE-A-2317045 beschreibt Fleischprodukte wie Leberwürste, die unter Verwendung einer Emulsion hergestellt werden, die durch Emulgieren von pflanzlichen Ölen und Fetten mit einem hohen Gehalt an mehrfach ungesättigten Fettsäuren unter Einsatz von mindestens 10 Gew.-% Caseinat und einer Fleischbrühe erhältlich sind.

In der DE-A-2639177 werden diätetische Fleischpasten beschrieben, die hergestellt werden durch Mischen von 40-59 Gew.-% magerem Fleisch mit 34-42 Gew.-% geschäumter Milch, gefolgt vom Verschneiden dieses Gemisches mit einer Emulsion aus geschäumter Milch, Caseinat und pflanzlichem Öl und Homogenisierung des erhaltenen Gemisches. Das verwendete pflanzliche Öl weist wenigstens 70 % mehrfach ungesättigte Fettsäuren auf.

Nachteilig bei den oben beschriebenen Produkten der DE-A-2317045 und der DE-A-2639177 ist die Verwendung von Fleischbrühe oder geschäumter Milch, die bei der Stabilität der erhaltenen Fleischprodukte Probleme bezüglich bakteriellem Befall, etc. aufwirft.

EP 0404214 B1 beschreibt ein streichbares Produkt auf Fleischbasis, das 15-40 Gew.-% mageres Fleisch mit höchstens 15 Gew.-% Fett, 10-30 Gew.-% vorgekochte Fleischfasern, 0,5-3 Gew.-% Alkalimetallcaseinat und bis zu 35 Gew.-% einer Öl- oder Fettzusammensetzung umfaßt, in deren verdaulichem Teil die Fettsäurereste maximal 35 % gesättigte Fettsäurereste umfassen. Durch die Verwendung von vorgekochten Fleischfasern und der spezifischen Fett- oder Ölzusammensetzung kann ein physikalisch und bakteriologisch stabiles Produkt erzielt werden.

Weiterhin sind bereits Fischpasten bekannt, die allerdings nicht die für ein Wurstprodukt gewünschte Konsistenz und geforderte Haltbarkeit aufweisen.

JP 63309167 A2 beschreibt Fischwurst- und Fischpastetenprodukte, die jedoch alle den Zusatz von Fremdeiweis, wie z.B. Natriumcaseinat, Gluten (aus Weizen) oder Sojabohnenprotein als Emulgator benötigen.

WO 93/00830 beschreibt eine cholesterinfreie Diätwurst, die statt üblichem Geflügel- bzw. Säugetierfleisch Fischfleisch wie Thunfisch-, Haifisch-, Forellenfleisch und besonders bevorzugt frisches Lachsfleisch verwendet. Durch Zugabe von 8-28 Gew.-% Pflanzenöl soll die Konsistenz von herkömmlicher Schnittwurst erreicht werden. In der Praxis hat sich aber gezeigt, daß bei der Verwendung von frischem Lachsfleisch in einem derartigen Diätwurstprodukt die Konsistenz nicht zufriedenstellend ist und aufgrund der durch die Kunden bemängelten "Krümeligkeit" des Produkts die Diätwurst gemäß der WO 93/00830 keinen Eingang auf den Markt gefunden hat.

Aufgabe der vorliegenden Erfindung ist es deshalb, ein Fischerzeugnis und insbesondere ein Fischwurstprodukt unter Vermeidung von Zusatz von Pflanzenöl, Fremdeiweis und Phosphaten und von cholesterinhaltigen Komponenten sowie ein Verfahren zur Herstellung bereitzustellen. Die Konsistenz des Fischerzeugnisses bzw. der diätetischen Fischzubereitung soll denen von herkömmlichen Fleischprodukten entsprechen, d.h. es sollen keine Beeinträchtigungen hinsichtlich Geschmack, Haltbarkeit oder Schnittfestigkeit im erzeugten Produkt im Vergleich zu am Markt vorhandenen Fleischerzeugnissen mehr vorhanden sein.

Die obige Aufgabe wird erfindungsgemäß durch das Fischerzeugnis gemäß Anspruch 1 sowie durch das Verfahren gemäß Anspruch 7 gelöst. In den Unteransprüchen sind vorteilhafte Ausführungsformen der Erfindung enthalten.

Das erfindungsgemäße Fischerzeugnis bzw. die erfindungsgemäße Fischzubereitung besteht aus den folgenden Komponenten.
(a) 5-35 Gew.-% Lachsfleisch,
(b) 5-30 Gew.-% Wasser, insbesondere 10-30 Gew.-% Wasser,
(c) bis zu 3 Gew.-% Additive aus der Gruppe ausgewählt aus Salz, Gewürzen und Geschmacksstoffen,
(d) 0-0,5 Gew.-% Verarbeitungshilfsmittel, insbesondere Kutterhilfsmittel, aus der Gruppe aus Lactat, Ascorbat, Tartrat, Citrat, Essiggenußsäuren,
(e) 0-0,5 Gew.-% Pökelsalz (Natriumnitrit) und
(f) als Rest Welsfleisch.

Die Komponenten (a) bis (f) ergänzen sich auf 100 Gew.-%. Der bei handelsüblichen Fleischerzeugnissen, d.h. Würsten, etc. enthaltene Säugetier- bzw. Geflügelfleisch- oder Fettanteil wird erfindungsgemäß durch Fischfleisch, nämlich durch eine Kombination aus Welsfleisch und Lachsfleisch ersetzt. Dabei wird ein Verhältnis von Welsfleisch zu Lachsfleisch von 3:1 eingehalten. Das erfindungsgemäß eingesetzte Welsfleisch (*silurus glanis*) stammt von Zuchtwelsen, die in Teichen gezogen werden. Insbesondere wird erfindungsgemäß die afrikanische Welsabart Melander eingesetzt. Aufgrund der spezifischen Proteinzusammensetzung des Welsfleisches kann erfindungsgemäß eine sehr gute Konsistenz der Fischerzeugnisse erzielt werden.

Als Lachsfleisch wird insbesondere erfindungsgemäß Lachsfleisch von frisch gefangenen irischen Lachsen eingesetzt.

Überraschend war, daß erfindungsgemäß ohne Zugabe von Emulgatoren und Pflanzenöl im Herstellungsprozeß eine Konsistenz wie bei herkömmlichen Schnittwurst- oder Bratwurstprodukten erzielt werden konnten. Die Zugabe von Salz sowie von Lactat oder Citrat in einer Menge von 0,3 bis 0,5 Gew.-% ermöglicht ein lang haltbares Wurstprodukt, welches bevorzugt in einen Kunstdarm gefüllt wird. Jedoch kann das Diätwurstprodukt auch wie herkömmliche Konserven sterilisiert und verpackt sein. Die Geschmacksnote läßt sich durch den Einsatz diverser Einlagen, d.h. von Welsfleischstücken und/oder Gewürzen in weiten Grenzen verändern.

Das erfindungsgemäße Fischerzeugnis kann als Fischzubereitung vorliegen. Hier seien insbesondere Vorgerichte, unter Beigabe von Gemüsen oder Früchten, erwähnt. Die erfindungsgemäße Fischzubereitung kann aber auch als Fischkloß, als Fischwurst einschließlich Fischleberwurst oder als Fischpastete hergestellt werden.

Weiterhin lassen sich auch Fischproteinkonzentrate auf Basis einer Kombination aus Wels- und Lachsfleisch herstellen. Gegebenenfalls können auch die Wels- und Lachsfleischproteine hydrolysiert und modifiziert werden, so daß unerwünschte Aminosäuren entfernt und bevorzugt die Aminosäuren Tyrosin und Tryptophan eingeführt werden, so daß spezifisch ein Proteinkonzentrat mit Aminosäuregemischen zur Verfügung gestellt werden kann, das beispielsweise für phenylalaninfreie Diäten seinen Einsatz finden kann.

Ein erfindungsgemäßes Verfahren zur Herstellung eines Wurstprodukts und insbesondere eines Diätwurstprodukts, das die folgenden Komponenten enthält:
(a) 5-35 Gew.-% Lachsfleisch,
(b) 5-30 Gew.-% Wasser, insbesondere 10-30 Gew.-% Wasser,
(c) bis zu 3 Gew.-% Additive aus der Gruppe ausgewählt aus Salz, Gewürzen und Geschmacksstoffen,
(d) 0-0,5 Gew.-%, insbesondere 0,3-0,5 Gew.-%, Verarbeitungshilfsmittel bzw. Kutterhilfsmittel aus der Gruppe aus Lactat, Ascorbat, Tartrat, Citrat,
(e) 0-0,5 Gew.-% Pökelsalz und
(f) als Rest Welsfleisch,
ist durch folgende Schritte charakterisiert:
(a) Zerkleinern des Fischfleisches in zumindest teilweise gefrorenem Zustand,
(b) Zugabe von Wasser und/oder Eis während des Zerkleinerungsprozesses,
(c) Mischen der zerkleinerten Masse unter Bildung eines Bräts und Zugabe von Salz und gegebenenfalls weiteren Additiven aus der Gruppe der Gewürze und Geschmacksstoffe sowie gegebenenfalls Einlagen von Welsfleisch (Melanderfleisch) und/oder Lachsfleischstücken, wahlweise kann Ascorbinsäure und/oder Citrat in Mengen von 0,3-0,5 Gew.-% zugegeben werden,
(d) Formung und Packung einer Wurst oder einer Konserve,
(e) Erhitzen der Wurst oder Konserve in einer Behandlungskammer auf eine bestimmte Kerntemperatur, bis ein bestimmter Haltbarkeitsgrad erreicht ist.

Zur Herstellung einer dauerhaften Wurst wird die abgepackte Wurst oder Konserve in Schritt (e) z.B. bei einer Brühwurst auf eine Temperatur von 70-80° C während etwa 20 Minuten, zur Herstellung einer Jadgwurst von 70-80° C während etwa 45-50 Minuten erhitzt. Zur Herstellung einer Konserve erfolgt eine Sterilisation bei 100° C, vorzugsweise 108° C, während einer bestimmten Zeitdauer.

Überraschenderweise zeigte sich nun, daß die erhaltenen erfindungsgemäßen Fischerzeugnisse keine Beeinträchtigung bezüglich Cholesterinfreiheit, Haltbarkeit, Geschmack oder Schnittfestigkeit zeigten. Aufgrund der Tatsache, daß ein hoher Anteil an mehrfach ungesättigten Fettsäuren in den erfindungsgemäßen Fischprodukten enthalten ist, macht dieses Produkt ernährungsphysiologisch sehr wertvoll.

Im folgenden wird eine besondere Ausführungsart des erfindungsgemäßen Verfahrens beschrieben. Erfindungsgemäß wird die Herstellung einer Diätbratwurst beschrieben.

Teilweise gefrorenes Wels- und Lachsfleisch wird in einer auf das Gesamtgewicht der Wurst bezogenen Menge von 5-25 Gew.-%, insbesondere 25 Gew.-%, Lachsfleisch, und 42,5-92,5 Gew.-%, insbesondere 50,5 Gew.-%, Welsfleisch in einen üblichen Kutter unter Zugabe von 5-30 Gew.-%, insbesondere von 21,5 Gew.-%, Wasser, 2,0 Gew.-% Salz und 0,5 Gew.-% Kutterhilfsmittel zerkleinert. Das Wasser wird in Form von Eisstückchen hinzugegeben. Die Verarbeitungstemperatur im Kutter wird auf 4° C, ± 0,5° C, eingestellt. Die Masse wird unter Bildung eines Bräts und gleichzeitiger Zugabe von 1 Gew.-% Salz und Gewürze zu einem Brät gemischt, dem je nach Geschmacksnuance kleine Welsfleischstückchen, die vorher gepökelt wurden, zugegeben. Die Wurst wird dann abgepackt. Schließlich wird die Wurst in einer Behandlungskammer auf 70-80° C während 45-50 Minuten erhitzt. Somit resultiert eine Wurst, die nach dem Abkühlen in Eiswasser Schnittfestigkeit und Konsistenz wie eine herkömmliche Jagdwurst aufweist. Geschmacksversuche ergaben, daß die erfindungsgemäße Jadgwurst einen sehr angenehmen und würzigen Geschmack hat. Aufgrund des hohen Gehaltes an ungesättigten Fettsäuren und der Tatsache, daß kein Cholesterin anwesend ist, ist die erfindungsgemäße Jagdwurst sehr gesund und besonders für den Personenkreis von Herz-Kreislaufpatienten als diätetisches Lebensmittel geeignet.

Die erfindungsgemäßen Fischerzeugnisse sind natürlich nicht auf Fischwursterzeugnisse beschränkt. Erfindungsgemäß können auch Fischklöße, Fischpasteten, -salate und dergleichen aus den oben beschriebenen Komponenten des erfindungsgemäßen Fischerzeugnisses hergestellt werden. Je nach Anforderung an die Haltbarkeit müssen die Erzeugnisse mit konservierenden Methoden, d.h. Sterilisieren, etc. behandelt werden. Die dabei erzielten Produkte sind je nach der erwarteten Haltbarkeit in Voll- und Halbkonserven zu unterscheiden.

## Patentansprüche

1. Fischerzeugnis, **dadurch gekennzeichnet, daß** es aus folgenden Komponenten besteht:
(a) 5-35 Gew.-% Lachsfleisch,
(b) 5-30 Gew.-% Wasser,
(c) bis zu 3 Gew.-% Salz und/oder Gewürze und/oder Geschmacksstoffe,
(d) 0-0,5 Gew.-% Verarbeitungshilfsmittel, insbesondere Kutterhilfsmittel,
(e) 0-0,5 Gew.-% Pökelsalz und
(f) als Rest Welsfleisch,
wobei sich die Komponenten (a) bis (f) auf 100 Gew.-% ergänzen.

2. Fischerzeugnis gemäß Anspruch 1, **gekennzeichnet durch** einen Wassergehalt von 5-30 Gew.-%.

3. Fischerzeugnis gemäß Anspruch 1, **dadurch gekennzeichnet, daß** die Verarbeitungs- bzw. Kutterhilfsmittel ausgewählt sind aus der Gruppe der Lactate, Ascorbate, Tartrate, Citrate und deren Gemischen.

4. Fischerzeugnis gemäß einem der vorhergehenden Ansprüche 1 bis 2, **dadurch gekennzeichnet, daß** es ein Bratfischerzeugnis, ein Kochfischerzeugnis, eine Fischzubereitung oder ein Fischdauerwarenerzeugnis ist.

5. Fischerzeugnis gemäß Anspruch 4, **dadurch gekennzeichnet, daß** die Fischzubereitung ein Fischvorgericht, eine Fischwurst, eine Fischpastete, ein Fischsalat, Fischklöße oder eine Fischproteinkonzentratzubereitung ist.

6. Fischerzeugnis gemäß Anspruch 5, **dadurch gekennzeichnet, daß** es ein Diätwurstprodukt ist.

7. Verfahren zur Herstellung eines Fischwurstprodukts, bestehend aus den Komponenten
(a) 5-35 Gew.-% Lachsfleisch,
(b) 5-30 Gew.-%, insbesondere 10-30 Gew.-% Wasser,
(c) bis zu 3 Gew.-% Additive aus der Gruppe Salz, Gewürze, Geschmacksstoffe und deren Gemische,
(d) 0-0,5 Gew.-% Verarbeitungshilfsmittel bzw. Kutterhilfsmittel aus der Gruppe der Lactate, Ascorbate, Tartrate, Citrate und deren Gemische,
(e) 0-0,5 Gew.-% Pökelsalz und
(f) als Rest Welsfleisch,
wobei sich die Komponenten (a) bis (f) auf 100 Gew.-% ergänzen, und das Verfahren die folgenden Schritte umfaßt:
(f) Zerkleinern des Fischfleisches in zumindest teilweise gefrorenem Zustand,
(g) Zugabe von Wasser und/oder Eis während des Zerkleinerungsprozesses,
(h) Mischen der zerkleinerten Masse unter Bildung eines Bräts und Zugabe von Salz und gegebenenfalls weiteren Additiven aus der Gruppe der Gewürze und Geschmacksstoffe sowie gegebenenfalls Einlagen von Welsfleisch und/oder Lachsfleischstücken,
(i) Formung und Packung einer Wurst oder einer Konserve und
(j) Erhitzen in einer Behandlungskammer auf eine bestimmte Kerntemperatur, bis ein bestimmter Haltbarkeitsgrad erreicht ist.

8. Verfahren gemäß Anspruch 7, **dadurch gekennzeichnet, daß** im Schritt (e) die Wurst auf eine Temperatur von 70-80° C für eine vorbestimmte Zeit erhitzt wird.

9. Verfahren gemäß Anspruch 7, **dadurch gekennzeichnet, daß** im Schritt (e) die Konserve auf über 100° C, vorzugsweise auf 108° C, erhitzt wird.

## Claims

1. Fish product, **characterized in that** it consists of the following constituents:
(a) 5 to 35 weight % salmon flesh,
(b) 5 to 30 weight % water,
(c) up to 3 weight % salt and/or spices and/or flavours,
(d) 0 to 0,5 weight % process aids, in particular cutter process aids,
(e) 0 to 0,5 weight % brine salt and
(f) siluride flesh as rest,
whereby the constituents (a) to (f) complement each other to 100 weight %.

2. Fish product according to claim 1, **characterized by** a water content of 30 weight %.

3. Fish product according to claim 1, **characterized in that** the process aids or cutter process aids are selected from the group of the lactates, ascorbates, tartrates, citrates and the mixtures thereof.

4. Fish product according to any of the preceding claims 1 to 2, **characterized in that** it is a fried fish product, a boiled fish product, a fish preparation or a nonperishable fish product.

5. Fish product according to claim 4, **characterized in that** the fish preparation is a fish first course, a fish sausage, a fish pâté, a fish salad, fish balls or a fish protein concentrate preparation.

6. Fish product according to claim 5, **characterized in that** it is a dietetic sausage product.

7. Method for producing a fish sausage product consisting of the components:
(a) 5 to 35 weight % salmon flesh,
(b) 5 to 30 weight %, in particular 10 to 30 weight % water,
(c) up to 3 weight % additives of the group salt, spices, flavours and the mixtures thereof,
(d) 0 to 0,5 weight % process aids or cutter process aids from the group of the lactates, ascorbates, tartrates, citrates and the mixtures thereof,
(e) 0 to 0,5 weight % brine salt and
(f) siluride flesh as rest,
whereby the constituents (a) to (f) complement each other to 100 weight % and the method comprises the following steps:
(f) chopping of the fish flesh in at least partially frozen state,
(g) addition of water and/or ice during the chopping process,
(h) mixing of the chopped mass by forming a paste and addition of salt and eventual further additives of the group of the spices and flavours as well as, if need be, garnish of siluride flesh and/or salmon flesh pieces,
(i) formation and packing of a sausage or of preserve and
(j) heating in a treatment chamber to a certain core temperature until a certain storage stability degree is reached.

8. Method according to claim 7, **characterized in that** in step (e) the sausage is heated to a temperature of 70-80° C for a predetermined time.

9. Method according to claim 7, **characterized in that** in step (e) the preserve is heated to over 100° C, preferably to 108° C.

## Revendications

1. Produit à base de poisson, **caractérisé en ce qu'**il est constitué par les composants suivants :
(a) 5 à 35 % en poids de chair de saumon,
(b) de 5 à 30 % en poids d'eau,
(c) jusqu'à 3 % en poids de sel et/ou d'épices et/ou d'aromes,
(d) de 0 à 0,5 % en poids de produits auxiliaires de transformation, en particulier d'auxiliaires de coupeuse,
(d) de 0 à 0,5 % en poids de sel de saumure et
(e) pour le reste de la chair de silure,
les composants (a) à (f) se complétant pour donner 100% en poids.

2. Produit à base de poisson selon la revendication 1, **caractérisé par** une teneur en eau de 5 à 30 % en poids.

3. Produit à base de poisson selon la revendication 1, **caractérisé en ce que** les auxiliaires de transformation ou de coupeuse sont sélectionnés dans le groupe des lactates, ascorbates, tartrates, citrates et de leurs mélanges.

4. Produit à base de poisson selon l'une des revendications précédentes 1 à 2, **caractérisé en ce que** c'est un produit à base de poisson à frire, à bouillir, une préparation de poisson ou une conserve de poisson.

5. Produit à base de poisson selon la revendication 4, **caractérisé en ce que** la préparation de poisson est une entrée de poisson, une saucisse de poisson, un pâté de poisson, une salade de poisson, des boulettes de poisson ou une préparation de concentré de protéines de poisson.

6. Produit à base se poisson selon la revendication 5, **caractérisé en ce que** c'est un produit de saucisse diététique.

7. Procédé pour la fabrication d'un produit de saucisse de poisson constitué par les composants suivants :
(a) 5 à 35 % en poids de chair de saumon,
(b) de 5 à 30 % en poids d'eau, en particulier de 10 à 30 % d'eau,
(c) jusqu'à 3 % en poids d'additifs dans le groupe sel, épices, arômes et leurs mélanges,
(d) de 0 à 0,5 % en poids de produits auxiliaires de transformation, en particulier d'auxiliaires de coupeuse, dans le groupe des lactates, ascorbates, tartrates, citrates et de leurs mélanges,
(d) de 0 à 0,5 % en poids de sel de saumure et
(e) pour le reste de la chair de silure,
les composants (a) à (f) se complétant pour donner 100% en poids et le procédé comprenant les étapes suivantes :
(f) mise en menus morceaux de la chair de poisson à l'état au moins partiellement congelé,
(g) addition d'eau et/ou de glace pendant le processus de mise en menus morceaux,
(h) mélange de la masse mise en menus morceaux en formant une pâte et addition de sel et d'éventuels autres additifs dans le groupe des épices et arômes ainsi que d'éventuelles garnitures de chair de silure et/ou de morceaux de chair de saumon,
(i) formation et emballage d'une saucisse ou d'une conserve et (j) réchauffement dans une chambre de traitement à une certaine température de noyau jusqu'à ce qu'un certain degré de conservabilité soit atteint.

8. Procédé selon la revendication 7, **caractérisé en ce qu'**à l'étape (e) la saucisse est réchauffée à une température de 70-90° C pour une durée prédéterminée.

9. Procédé selon la revendication 7, **caractérisé en ce qu'**à l'étape (e) la conserve est réchauffée à plus de 100° C, de préférence à 108 °C.
